# FASCICULE DE BREVET EUROPEEN

(11) **EP 3 082 529 B1**
(45) Date de publication et mention de la délivrance du brevet: **19.08.2020**
(21) Numéro de dépôt: 14828208.0
(22) Date de dépôt: 11.12.2014
(51) Int. Cl.: A47J 37/10, A47J 27/00

(54) **ARTICLE CULINAIRE INDUCTIF COMMUNICANT ET PROCEDE D' APPAIRAGE D'UN TEL ARTICLE**
KOMMUNIZIERENDER INDUKTIVER KOCHARTIKEL UND VERFAHREN ZUR PAARUNG SOLCH EINES ARTIKELS
COMMUNICATING INDUCTIVE CULINARY ARTICLE AND METHOD FOR PAIRING SUCH AN ARTICLE

(30) Priorité: 20.12.2013 FR 1363354
(43) Date de publication de la demande: 26.10.2016
(73) Titulaire: SEB S.A., 69130 Ecully (FR)
(72) Inventeur: GHECHOUA, Karim, F-69800 Saint Priest (FR); GAILHARD, Thierry, F-69970 Chaponnay (FR); CUBIZOLLES, Serge, F-38780 Oytier Saint Oblas (FR)
(74) Mandataire: Bourrières, Patrice
(86) Numéro de dépôt international: PCT/FR2014/053296
(87) Numéro de publication internationale: WO 2015/092230

(56) Documents cités:
- WO-A1-2013/007953
- WO-A1-2013/098240
- WO-A2-99/41950
- US-A1- 2007 080 158

## Description

L'invention se situe dans le domaine des articles culinaires.

Plus particulièrement l'invention concerne un article culinaire adapté pour la cuisson par induction qui comprend des moyens de mesure d'un champ magnétique et des moyens de communication associés.

### PRESENTATION DE L'ART ANTERIEUR

On connait dans l'art antérieur des articles culinaires dont le chauffage se fait par induction et qui peuvent communiquer soit avec une table à induction, soit avec un module déporté.

Ainsi les documents WO2010080738 et WO 9941950 décrivent un système qui comprend un article culinaire chauffé par une table à induction. Ces documents décrivent une étape de détection de la présence de l'article culinaire sur la table à induction. Celle-ci se fait par une analyse de la variation d'une réponse magnétique reçue par la table à induction et c'est un dispositif propre à la table à induction qui réalise cette opération. De la même manière la table à induction est capable d'identifier le type d'article culinaire en fonction de la réponse magnétique. Ces documents décrivent également une poignée intelligente intégrée dans l'article culinaire. Cette poignée intelligente comprend de l'électronique embarquée qui est susceptible d'exécuter diverses fonctions et de communiquer avec un module de communication intégré dans la plaque à induction. La particularité réside dans le fait que cette électronique embarquée est alimentée de manière autonome. Pour réaliser cette alimentation un dispositif est installé dans la poignée ou dans le fond de l'article culinaire afin de récupérer une partie de l'énergie d'induction.

Le but recherché dans les documents WO2010080738 et WO9941950 est d'alimenter en énergie la poignée intelligente afin que celle-ci soit opérationnelle et communicante.

Un inconvénient rencontré est que c'est la table à induction qui gère l'ensemble des opérations de détection et de présence de l'article culinaire. L'article culinaire ne permet pas de détecter la présence ou non d'un champ magnétique et d'informer la table à induction sur l'état d'activation du foyer générateur sur lequel il est positionné. Il y a communication et échanges d'informations possibles entre l'article culinaire et la plaque à induction seulement lorsque la table à induction génère un champ magnétique qui alimente en énergie la poignée intelligente de l'article culinaire.

Le but de la présente invention est donc de remédier aux inconvénients précités et de permettre à un article culinaire de détecter de manière indépendante la présence ou l'absence d'un champ magnétique sur un foyer de chauffe, d'en informer la table à induction et d'associer le foyer de chauffe activé avec l'article culinaire. Par indépendante on entend que même si le foyer sur lequel l'article culinaire est positionné est éteint, l'article culinaire peut transmettre une information.

Ce but est atteint à l'aide d'un article culinaire qui comprend une surface de cuisson compatible avec la cuisson par induction et l'article culinaire comprend une unité de traitement du signal relié à un dispositif de mesure d'un champ magnétique et à un module de communication bidirectionnel sans fil.

Selon une caractéristique de l'invention l'unité de traitement du signal génère au moins une information de confirmation de présence d'un champ magnétique.

Selon une caractéristique de l'invention l'article culinaire comprend un dispositif de mise sous tension de l'unité de traitement du signal et/ou du module de communication bidirectionnel sans fil.

Selon une caractéristique de l'invention l'unité de traitement du signal comprend un calculateur et une mémoire.

Selon une caractéristique de l'invention l'unité de traitement du signal est programmable sans fil et à distance.

Selon une caractéristique de l'invention l'unité de traitement du signal et/ou le module de communication bidirectionnel sans fil sont amovibles de l'article culinaire.

Selon une caractéristique de l'invention l'article culinaire comprend un afficheur relié à l'unité de traitement du signal.

Selon une caractéristique de l'invention l'article culinaire comprend une unité de commande reliée à l'unité de traitement du signal.

Selon une caractéristique de l'invention l'article culinaire comprend un capteur de température relié à l'unité de traitement du signal.

Selon une caractéristique de l'invention le dispositif de mesure du champ magnétique est une thermistance.

Selon une autre caractéristique de l'invention le dispositif de mesure du champ magnétique est un thermocouple.

Selon encore une autre caractéristique de l'invention le dispositif de mesure du champ magnétique est un capteur à magnétorésistance.

Selon encore une autre caractéristique de l'invention le dispositif de mesure du champ magnétique est réalisé à partir d'une bobine pouvant avoir une ou plusieurs spires.

Selon une caractéristique de l'invention le dispositif de mesure du champ magnétique est positionné dans ou sur la surface de cuisson de l'article culinaire.

Selon une caractéristique de l'invention le dispositif de mesure du champ magnétique est positionné dans la poignée de l'article culinaire.

Selon une caractéristique de l'invention l'article culinaire comprend un dispositif de récupération d'énergie composé de bobines réceptrices qui transmettent l'énergie récupérée à l'unité de traitement du signal et/ou au module de communication 5 de l'article culinaire.

L'invention concerne également un procédé d'appairage avec un foyer d'une table à induction d'un article culinaire tel que décrit précédemment. La table à induction comprend un dispositif de communication et une unité de calcul. Le procédé comprend les étapes suivantes :
- génération d'un flux magnétique par le foyer de la table à induction,
- mise sous tension de l'unité de traitement du signal et/ou du module de communication bidirectionnel sans fil par une action sur le dispositif de mise sous tension,
- positionnement de l'article culinaire sur le foyer générateur du flux magnétique,
- détection du flux magnétique du foyer de la table à induction par le dispositif de mesure de l'article culinaire positionné sur ce foyer, récupération et traitement par l'unité de traitement du signal de l'article culinaire du signal détecté par le dispositif de mesure de l'article culinaire,
- récupération du signal traité par le module de communication, le signal traité comprenant au moins une information de confirmation de présence du champ magnétique,
- émission par le module de communication de cette information,
- réception de cette information par le module de communication de la table à induction,
- traitement de cette information reçue par l'unité de calcul de la table à induction,
- appairage du foyer générateur et de l'article culinaire émetteur.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en coupe d'un article culinaire dans un premier mode de réalisation;
- la figure 2 est une vue en coupe d'un système d'une table à induction et d'un article culinaire;
- la figure 3 est une vue en coupe d'un article culinaire dans un second mode de réalisation;
- la figure 4 est une vue de dessus d'un article culinaire ;
- la figure 5 est une vue de dessus d'un article culinaire ;

### DESCRIPTION

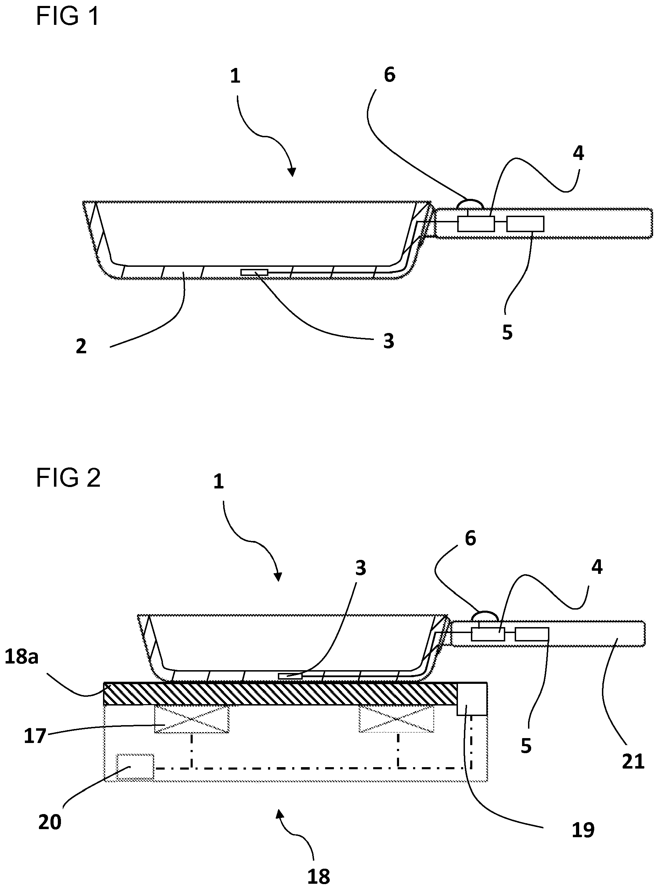

En référence à la figure 1 un article culinaire 1 comprend une surface 2 de cuisson. Cette surface 2 de cuisson est compatible avec la cuisson par induction. On entend par là que en présence d'un champ ou d'un flux magnétique la surface 2 de cuisson s'élève thermiquement. L'article culinaire 1 comprend également une unité de traitement 4 du signal.

On comprendra par unité de traitement 4 du signal une unité électronique capable d'effectuer des opérations logiques primaires sur des signaux en entrée et de retourner un résultat de cette opération en sortie.

On verra par la suite que dans le cadre de l'invention cette unité de traitement 4 du signal génère au moins une information de confirmation de présence d'un champ magnétique.

L"article culinaire 1 comprend également un dispositif 3 de mesure d'un champ magnétique relié à cette unité de traitement 4. La liaison entre ces deux éléments (3, 4) se fait de manière filaire.

Dans une autre variante de réalisation cette liaison peut se faire sans fil.

Par dispositif 3 de mesure d'un champ magnétique on entend un dispositif qui permet de détecter et de mesurer un champ magnétique par un changement d'état physique du dispositif 3 lorsqu'il est en présence d'un champ magnétique proche.

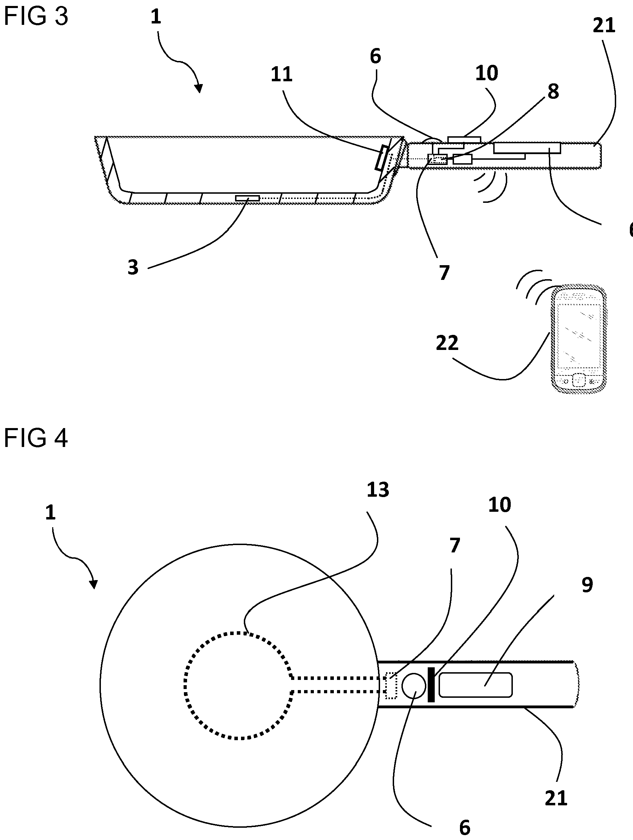

Sans sortir du cadre de l'invention le dispositif 3 de mesure du champ est une bobine comprenant une ou plusieurs spires. Ainsi lorsqu'un flux magnétique traverse la bobine, une tension est induite aux bornes de la bobine. Cette tension induite est l'image du flux magnétique. Sur la figure 4, la bobine comprend une spire unique appelée fil conducteur 13. Ce fil conducteur 13 réalisant une boucle permettra de détecter la présence d'un champ magnétique.

Dans une autre variante non illustrée le dispositif 3 de mesure du champ est une thermistance à Coefficient de Température Négatif du type thermistance CTN. La thermistance CTN avec ses fils de connexion constitue une boucle de courant. Lorsque qu'un flux magnétique traverse cette boucle, une tension induite image de ce flux magnétique apparaît aux bornes de la thermistance CTN.

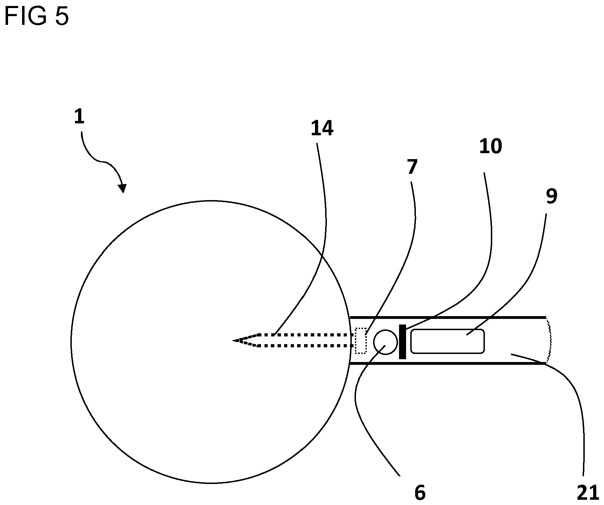

Dans une autre variante de réalisation le dispositif 3 de mesure du champ magnétique est un thermocouple 14 comme illustré à la figure 5. Le thermocouple 14 constitue une boucle de courant. Si un flux magnétique traverse cette boucle, une tension induite image de ce flux apparaît aux bornes du thermocouple 14.

Dans une autre variante encore, non illustrée, le dispositif 3 de mesure du champ magnétique est un capteur de champ magnétique. Ce capteur peut être un capteur à effet Hall ou un capteur de type magnétorésistance. Ce capteur permet de mesurer un niveau de champ magnétique et donc de détecter la présence de flux magnétique dans son environnement proche.

Le dispositif 3 de mesure du champ magnétique est positionné dans la surface 2 de cuisson de l'article culinaire 1. Sans toutefois sortir du cadre de l'invention, le dispositif 3 de mesure du champ magnétique peut être positionné dans n'importe quelle partie de l'article culinaire 1 comme une poignée 21 lorsque celui-ci en comprend une comme cela est visible sur les figures 1 à 5.

Cette poignée 21 peut être fixe ou amovible par rapport à l'article culinaire 1.

L'article culinaire 1 comprend également un module de communication 5 bidirectionnel qui est relié à l'unité de traitement 4 du signal. Ce module de communication 5 bidirectionnel permet de transmettre au moins une information de confirmation de présence d'un champ magnétique.

Dans le cadre de l'invention ce module de communication 5 est un module de communication point à point.

Dans le cadre de l'invention l'unité de traitement 4 du signal et le module de communication 5 sont compris dans la poignée 21 et cette poignée 21 peut être amovible de l'article culinaire 1.

Dans d'autres variantes de réalisation, celui-ci peut être un module infrarouge, un module de communication en champ proche du type NFC, ou un module Bluetooth®.

Dans le cadre de l'invention comme visible sur la figure 2, le module de communication 5 transmet au moins une information de confirmation de la présence du flux ou du champ magnétique à une table de cuisson par induction 18, appelée classiquement table à induction 18. Cette table à induction comprend au moins un foyer 18a et le foyer 18a comprend une bobine 17 qui génère un flux ou un champ magnétique.

A cet effet la table de cuisson par induction 18 comprend un dispositif 19 de communication et une unité de calcul 20 afin de recevoir l'information de l'article culinaire 1.

Comme on peut le voir sur les figures 1 à 5, l'article culinaire 1 comprend un dispositif de mise sous tension 6 de l'unité de traitement 4 du signal et/ou du module de communication 5 bidirectionnel sans fil. Ce dispositif de mise sous tension 6 est classiquement appelé interrupteur.

Il existe différentes manières d'alimenter en courant l'unité de traitement 4 du signal et/ou du module de communication 5 bidirectionnel sans fil. Classiquement on peut utiliser une batterie ou des piles. Les batteries peuvent être positionnées dans la poignée 21. Une autre méthode consiste à récupérer l'énergie magnétique générée par la bobine 17 du foyer 18a sur lequel est positionné l'article culinaire 1. Cette récupération d'énergie peut se faire via un dispositif de récupération d'énergie composé de bobines réceptrices et transmettant le courant ainsi récupéré à l'unité de traitement 4 du signal et/ou du module de communication 5 en vue de les alimenter et sous réserve que le dispositif de mise sous tension 6 soit activé. Ce dispositif de récupération d'énergie (non représenté) peut être positionné au niveau ou dans la surface 2 de cuisson de l'article culinaire 1 ou encore dans la poignée 21 de l'article culinaire 1.

Lorsque l'ensemble est hors tension, l'article culinaire 1 peut être positionné sur la table à induction 18 sans que l'unité de traitement 4 du signal et/ou le module de communication 5 ne soient actifs. Ceci permet d'augmenter l'efficacité et la sécurité d'utilisation de l'article culinaire 1.

L'unité de traitement 4 du signal de l'article culinaire 1 comprend également un calculateur 7 et une mémoire 8 comme cela est visible sur la figure 3. Cette mémoire 8 permet de stocker différents types d'informations comme le type d'ustensile, des profils de cuisson, des profils de température de l'article culinaire 1.

Dans un mode de réalisation visible à la figure 3, l'article culinaire 1 comprend une unité de commande 10 reliée à l'unité de traitement 4 du signal.

Par unité de commande 10 on entend une unité sur laquelle un utilisateur peut agir. Par le biais de cette unité de commande 10, un utilisateur peut donc envoyer des informations de commande à l'unité de traitement 4 du signal. Toujours en référence à la figure 3, l'article culinaire 1 comprend un capteur 11 de température relié à l'unité de traitement 4 du signal. Ce capteur 11 peut renvoyer une information de température à l'unité de traitement 4 du signal. Sans sortir du cadre de l'invention, le capteur 11 de température peut être positionné au niveau de la surface 2 de cuisson de l'article culinaire 1 ou sur une paroi de l'article culinaire 1 comme cela est visible sur la figure 3.

L'unité de traitement 4 du signal est programmable sans fil et à distance par un terminal de communication portable 22. L'échange de données entre la mémoire 8 de l'unité de traitement 4 du signal et le terminal de communication 22 peut se faire dans les deux sens. Un utilisateur peut donc à distance commander l'unité de traitement 4 du signal.

Lorsque l'unité de traitement 4 du signal est couplée à l'unité de commande 10 et/ou au capteur 11 de température, le calculateur 7 de l'unité de traitement 4 du signal permet, en fonction des données transmises par l'unité de commande 10 et/ou par le capteur 11 de température, de retourner une information de consigne. Cette information de consigne est transmise par l'intermédiaire du dispositif 19 de communication de la table à induction 18 à l'unité de calcul 20 de la table à induction 18. L'unité de calcul 20 permet ensuite de réguler la puissance générée par les bobines 17 du foyer 18a activé.

Dans une variante de réalisation l'unité de traitement 4 du signal et/ou le module de communication 5 bidirectionnel sans fil sont amovibles de l'article culinaire 1. Dans ce cas de

L'article culinaire 1 comprend également un afficheur 9 relié à l'unité de traitement 4 du signal et cet afficheur 9 permet de visualiser les informations de l'unité de traitement 4 du signal.

Cet afficheur 9 est compris dans la poignée 21 et l'afficheur 9 peut être amovible de la poignée 21 et de l'unité de traitement 4 du signal.

Dans un mode de fonctionnement nullement limitatif, l'invention concerne également un procédé d'appairage d'un foyer 18a de la table à induction 18 avec l'article culinaire 1 tel que décrit précédemment.

Un utilisateur allume un des foyers 18a de la table à induction 18 ce qui va générer un flux magnétique par le foyer 18a de la table à induction 18. L'utilisateur doit ensuite mettre sous tension au moins l'unité de traitement 4 du signal et/ou le module de communication 5 bidirectionnel sans fil par une action sur le dispositif de mise sous tension 6 de l'article culinaire 1.

Lorsque cet article culinaire 1 est positionné sur le foyer 18a alimenté, le dispositif 3 de mesure du flux magnétique de l'article culinaire 1 détecte la présence d'un flux magnétique généré par le foyer 18a alimenté et cette information est récupérée par l'unité de traitement 4 du signal de l'article culinaire 1.

Le module de communication 5 récupère cette information afin de l'émettre. L'information envoyée comprend au moins une information de confirmation de la présence du champ magnétique.

Cette information est ensuite reçue par le dispositif 19 de communication de la table à induction 18 et l'unité de calcul 20 de la table à induction 18 traite cette information afin d'appairer le foyer 18a générateur avec l'article culinaire 1.

Ce système permet d'apporter une intelligence à l'article culinaire 1 lui permettant ainsi de connaître l'état du foyer sur lequel il se situe et de communiquer avec son environnement.

Dans une variante de l'étape de transmission des informations du procédé décrit ci-dessus il est possible également de transmettre des informations intrinsèques à l'ustensile telles que la confirmation de la puissance de chauffe programmée, et/ou le profil de cuisson adapté. Ces informations permettent ainsi de réguler la puissance de chauffe dans le cas où ces informations sont reçues par la table à induction 18 comme des informations de consignes.

On comprendra que diverses modifications et/ou améliorations évidentes pour l'homme du métier peuvent être apportées au mode de réalisation de l'invention décrit dans la présente description sans sortir du cadre de l'invention défini par les revendications annexées.

## Revendications

1. Article culinaire (1) comprenant une surface (2) de cuisson compatible avec la cuisson par induction, une unité de traitement (4) du signal relié à un dispositif (3) de mesure d'un champ magnétique et à un module de communication (5) bidirectionnel sans fil **caractérisé en ce que** l'article culinaire comprend une batterie ou des piles pour alimenter l'unité de traitement (4) du signal et le module de communication (5), et l'unité de traitement (4) du signal génère au moins une information de confirmation de présence ou d'absence d'un champ magnétique et le module de communication (5) bidirectionnel transmet au moins cette information.

2. Article culinaire (1) selon la revendication 1 **caractérisé en ce qu'**il comprend un dispositif de mise sous tension (6) de l'unité de traitement (4) du signal et/ou du module de communication (5) bidirectionnel sans fil.

3. Article culinaire (1) selon l'une des revendications précédentes **caractérisé en ce que** l'unité de traitement (4) du signal comprend un calculateur (7) et une mémoire (8).

4. Article culinaire (1) selon l'une des revendications précédentes **caractérisé en ce que** l'unité de traitement (4) du signal est programmable sans fil et à distance.

5. Article culinaire (1) selon l'une des revendications précédentes **caractérisé en ce que** l'unité de traitement (4) du signal et/ou le module de communication (5) bidirectionnel sans fil sont amovibles de l'article culinaire (1).

6. Article culinaire (1) selon l'une des revendications précédentes **caractérisé en ce que** l'article culinaire (1) comprend un afficheur (9) relié à l'unité de traitement (4) du signal.

7. Article culinaire (1) selon l'une des revendications précédentes **caractérisé en ce que** l'article culinaire (1) comprend une unité de commande (10) reliée à l'unité de traitement (4) du signal.

8. Article culinaire (1) selon l'une des revendications précédentes **caractérisé en ce que** l'article culinaire (1) comprend un capteur (11) de température relié à l'unité de traitement (4) du signal.

9. Article culinaire (1) selon l'une des revendications précédentes **caractérisé en ce que** le dispositif (3) de mesure du champ magnétique est une thermistance.

10. Article culinaire (1) selon les revendications 1 à 8 **caractérisé en ce que** le dispositif (3) de mesure du champ magnétique est un thermocouple (14).

11. Article culinaire(1) selon les revendications 1 à 8 **caractérisé en ce que** le dispositif (3) de mesure du champ magnétique est un capteur magnétique.

12. Article culinaire (1) selon les revendications 1 à 8 **caractérisé en ce que** le dispositif (3) de mesure du champ magnétique est réalisé à partir d'une bobine (13) pouvant avoir une ou plusieurs spires.

13. Article culinaire (1) selon l'une des revendications précédentes **caractérisé en ce que** le dispositif (3) de mesure du champ magnétique est positionné soit dans la surface (2) de cuisson de l'article culinaire (1) ou soit dans une poignée (21) que comprend l'article culinaire (1).

14. Article culinaire (1) selon l'une des revendications précédentes **caractérisé en ce qu'**il comprend un dispositif de récupération d'énergie composé de bobines réceptrices et transmettant le courant ainsi récupéré à l'unité de traitement (4) du signal et/ou au module de communication (5) de l'article culinaire (1).

15. Procédé d'appairage avec un foyer (18a) d'une table de cuisson à induction (18) d'un article culinaire (1) tel que revendiqué précédemment, la table à induction (18) comprend un dispositif (19) de communication et une unité de calcul (20), **caractérisé en ce que** le procédé comprend les étapes suivantes:
- mise sous tension de l'unité de traitement (4) du signal et/ou du module de communication (5) bidirectionnel sans fil par une action sur le dispositif de mise sous tension (6),
- génération d'un flux magnétique par le foyer (18a) de la table à induction (18),
- positionnement de l'article culinaire (1) sur le foyer (18a) générateur du flux magnétique,
- détection de la présence ou de l'absence du flux magnétique d'un foyer (18a) de la table à induction (18) par le dispositif (3) de mesure de l'article culinaire (1) positionné sur ce foyer, récupération et traitement par l'unité de traitement (4) du signal de l'article culinaire (1) du signal détecté par le dispositif (3) de mesure de l'article culinaire (1),
- récupération du signal traité par le module de communication (5), le signal traité comprenant au moins une information de confirmation de présence ou d'absence du champ magnétique,
- émission par le module de communication (5) de cette information,
- réception de cette information par le dispositif (19) de communication de la table à induction (18),
- traitement de cette information reçue par l'unité de calcul (20) de la table à induction (18),
- en cas d'information de confirmation de présence de champ magnétique alors appairage du foyer (18a) générateur et de l'article culinaire (1) émetteur.

## Patentansprüche

1. Kochartikel (1), umfassend eine Kochfläche (2), die mit dem Induktionskochen kompatibel ist, eine Signalverarbeitungseinheit (4), die mit einer Vorrichtung (3) zur Messung des Magnetfeldes und einem drahtlosen, bidirektionalen Kommunikationsmodul (5) verbunden ist, **dadurch gekennzeichnet, dass** der Kochartikel eine Batterie oder Zellen umfasst, um die Signalverarbeitungseinheit (4) und das Kommunikationsmodul (5) zu versorgen, und dass die Signalverarbeitungseinheit (4) zumindest eine Information der Anwesenheit oder der Abwesenheit eines Magnetfeldes erzeugt, und dass das drahtlose, bidirektionale Kommunikationsmodul (5) mindestens diese Information überträgt.

2. Kochartikel (1) nach Anspruch 1, **dadurch gekennzeichnet, dass** er eine Vorrichtung zur Unterspannungsetzung (6) der Signalverarbeitungseinheit (4) und / oder des drahtlosen, bidirektionalen Kommunikationsmoduls (5) umfasst.

3. Kochartikel (1) nach einem der vorhergehenden Ansprüche, **dadurch gekennzeichnet, dass** die Signalverarbeitungseinheit (4) einen Rechner (7) und einen Speicher (8) umfasst.

4. Kochartikel (1) nach einem der vorhergehenden Ansprüche, **dadurch gekennzeichnet, dass** die Signalverarbeitungseinheit (4) drahtlos und aus der Ferne programmierbar ist.

5. Kochartikel (1) nach einem der vorhergehenden Ansprüche, **dadurch gekennzeichnet, dass** die Signalverarbeitungseinheit (4) und / oder das drahtlose, bidirektionale Kommunikationsmodul (5) aus dem Kochartikel (1) entfernbar sind.

6. Kochartikel (1) nach einem der vorhergehenden Ansprüche, **dadurch gekennzeichnet, dass** der Kochartikel (1) eine Anzeige (9) umfasst, die mit der Signalverarbeitungseinheit (4) verbunden ist.

7. Kochartikel (1) nach einem der vorhergehenden Ansprüche, **dadurch gekennzeichnet, dass** der Kochartikel (1) eine Steuereinheit (10) umfasst, die mit der Signalverarbeitungseinheit (4) verbunden ist.

8. Kochartikel (1) nach einem der vorhergehenden Ansprüche, **dadurch gekennzeichnet, dass** der Kochartikel (1) einen Temperatursensor (11) umfasst, der mit der Signalverarbeitungseinheit (4) verbunden ist.

9. Kochartikel (1) nach einem der vorhergehenden Ansprüche, **dadurch gekennzeichnet, dass** die Vorrichtung (3) zur Messung des Magnetfeldes ein Thermistor ist.

10. Kochartikel (1) nach den Ansprüchen 1 bis 8 **dadurch gekennzeichnet, dass** die Vorrichtung (3) zur Messung des Magnetfeldes ein Thermoelement (14) ist.

11. Kochartikel (1) nach den Ansprüchen 1 bis 8, **dadurch gekennzeichnet, dass** die Vorrichtung (3) zur Messung des Magnetfeldes ein Magnetsensor ist.

12. Kochartikel (1) nach den Ansprüchen 1 bis 8, **dadurch gekennzeichnet, dass** die Vorrichtung (3) zur Messung des Magnetfeldes ausgehend von einer Spule (13) hergestellt ist, die eine oder mehrere Windungen aufweisen kann.

13. Kochartikel (1) nach einem der vorhergehenden Ansprüche, **dadurch gekennzeichnet, dass** die Vorrichtung (3) zur Messung des Magnetfelds (3) entweder in der Kochfläche (2) des Kochartikels (1) oder in einem Griff (21) positioniert ist, den der Kochartikel (1) umfasst.

14. Kochartikel (1) nach einem der vorhergehenden Ansprüche, **dadurch gekennzeichnet, dass** er eine Vorrichtung zur Energierückgewinnung umfasst, die aus Empfangsspulen besteht und den so zurückgewonnenen Strom an die Signalverarbeitungseinheit (4) und / oder das Kommunikationsmodul (5) des Kochartikels (1) überträgt.

15. Verfahren zum Koppeln einer Induktionskochplatte (18) eines Kochartikels (1) mit einem Kochfeld (18a), wie oben beansprucht, wobei die Induktionskochplatte (18) eine Vorrichtung (19) zur Kommunikation und eine Berechnungseinheit (20) umfasst, **dadurch gekennzeichnet, dass** das Verfahren die folgenden Schritte umfasst:
- Unterspannungsetzung der Signalverarbeitungseinheit (4) und / oder des drahtlosen, bidirektionalen Kommunikationsmoduls (5) durch eine Einwirkung auf die Vorrichtung zur Unterspannungsetzung (6),
- Erzeugung eines magnetischen Flusses durch das Kochfeld (18a) der Induktionskochplatte (18),
- Positionierung des Kochartikels (1) auf dem Kochfeld (18a) als Erzeuger des magnetischen Flusses,
- Erfassung der Anwesenheit oder der Abwesenheit des magnetischen Flusses eines Kochfelds (18a) der Induktionskochplatte (18) durch die Vorrichtung (3) zur Messung des Kochartikels (1), der auf diesem Kochfeld positioniert ist, Rückgewinnung und Verarbeitung des Signals, das von der Vorrichtung (3) zur Messung des Kochartikels (1) erfasst wurde, durch die Signalverarbeitungseinheit (4) des Kochartikels (1),
- Rückgewinnung des von dem Kommunikationsmodul (5) verarbeiteten Signals, wobei das verarbeitete Signal mindestens eine Information zur Bestätigung der Anwesenheit oder der Abwesenheit des Magnetfelds umfasst,
- Emission dieser Information durch das Kommunikationsmodul (5),
- Empfang dieser Information durch die Kommunikationsvorrichtung (19) der Induktionskochplatte (18),
- Verarbeitung dieser Information, die von der Berechnungseinheit (20) der Induktionskochplatte (18) empfangen wurde,
- im Fall der Information der Bestätigung der Anwesenheit des Magnetfelds hin Paarung des Kochfelds (18a) als Generator und des Kochartikels (1) als Sender.

## Claims

1. Culinary article (1) comprising a cooking surface (2) compatible with induction cooking, a signal processing unit (4) connected to a magnetic field measuring device (3) and to a wireless bidirectional communication module (5) **characterised in that** the culinary article comprises a battery or batteries to supply power to the signal processing unit (4) and the communication module (5), and the signal processing unit (4) generates at least one confirmation information of the presence or absence of a magnetic field and the bidirectional communication module (5) transmits at least this information.

2. Culinary article (1) according to claim 1 **characterised in that** it comprises a device for powering up (6) the signal processing unit (4) and/or the wireless bidirectional communication module (5).

3. Culinary article (1) according to one of the preceding claims **characterised in that** the signal processing unit (4) comprises a computer (7) and a memory (8).

4. Culinary article (1) according to one of the preceding claims **characterised in that** the signal processing unit (4) is programmable wirelessly and remotely.

5. Culinary article (1) according to one of the preceding claims **characterised in that** the signal processing unit (4) and/or the wireless bidirectional communication module (5) are removable from the culinary article (1).

6. Culinary article (1) according to one of the preceding claims **characterised in that** the culinary article (1) comprises a display (9) connected to the signal processing unit (4).

7. Culinary article (1) according to one of the preceding claims **characterised in that** the culinary article (1) comprises a control unit (10) connected to the signal processing unit (4).

8. Culinary article (1) according to one of the preceding claims **characterised in that** the culinary article (1) comprises a temperature sensor (11) connected to the signal processing unit (4).

9. Culinary article (1) according to one of the preceding claims **characterised in that** the magnetic field measuring device (3) is a thermistor.

10. Culinary article (1) according to claims 1 to 8 **characterised in that** the magnetic field measuring device (3) is a thermocouple (14).

11. Culinary article (1) according to claims 1 to 8 **characterised in that** the magnetic field measuring device (3) is a magnetic sensor.

12. Culinary article (1) according to claims 1 to 8 **characterised in that** the magnetic field measuring device (3) is made from a coil (13) that can have one or more turns.

13. Culinary article (1) according to one of the preceding claims **characterised in that** the magnetic field measuring device (3) is positioned either in the cooking surface (2) of the culinary article (1) or in a handle (21) of the culinary article (1).

14. Culinary article (1) according to one of the preceding claims **characterised in that** it comprises an energy recovery device composed of receiver coils and transmitting the current thus recovered to the signal processing unit (4) and/or the communication module (5) of the culinary article (1).

15. Method of pairing with a firebox (18a) an induction cooktop table (18) of a culinary article (1) as claimed above, the induction cooktop table (18) comprises a communication device (19) and a computing unit (20), **characterised in that** the method comprises the following steps:
- powering on of the signal processing unit (4) and/or the wireless bidirectional communication module (5) by an action on the power-on device (6),
- generation of the magnetic flux by the firebox (18a) of the induction cooktop table (18),
- positioning of the culinary article (1) on the firebox (18a), generator of the magnetic flux,
- detection of the presence or absence of the magnetic flux of a firebox (18a) of the induction cooktop table (18) by the device (3) for measuring the culinary item (1) positioned on this firebox, recovery and processing by the signal processing unit (4) of the culinary article (1) of the signal detected by the device (3) for measuring the culinary article (1),
- recovery of the signal processed by the communication module (5), the processed signal comprising at least one confirmation information of the presence or absence of the magnetic field,
- transmission by the communication module (5) of this information,
- receipt of this information by the communication device (19) of the induction cooktop table (18),
- processing of this information received by the computing unit (20) of the induction cooktop table (18),
- in the case of confirmation information of presence of magnetic field, then pairing of the firebox (18a) generator and the culinary article (1) transmitter.
